Europäisches Patentamt

European Patent Office

Office européen des brevets

(19)

(11) Publication number: **0 181 118 B1**

(12) **EUROPEAN PATENT SPECIFICATION**

(45) Date of publication of patent specification: **09.09.92** (51) Int. Cl.5: **H04L 12/56**

(21) Application number: **85307637.0**

(22) Date of filing: **23.10.85**

(54) **Data transmission system.**

(30) Priority: **07.11.84 GB 8428154**

(43) Date of publication of application:
**14.05.86 Bulletin 86/20**

(45) Publication of the grant of the patent:
**09.09.92 Bulletin 92/37**

(84) Designated Contracting States:
**AT BE CH DE FR IT LI LU NL SE**

(56) References cited:
**GB-A- 2 069 799**

**EUROPEAN CONFERENCE ON OPTICAL
COMMUNICATION, session c, Cannes,
21st-24th September 1982, communication
c9, IEEE, New York, US; K. OSHIMA et al.:
"Fibre optic TDMA system for passive local
networks"**

(73) Proprietor: **THE GENERAL ELECTRIC COM-
PANY, p.l.c.
1 Stanhope Gate
London W1A 1EH(GB)**

(72) Inventor: **West, Barry Gordon
54, Torquay Road
Springfield Chelmsford Essex(GB)**

(74) Representative: **Loven, Keith James et al
GEC Patent Department, GEC Marconi Limit-
ed, West Hanningfield Road
Great Baddow Chelmsford, Essex CM2
8HN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

EP 0 181 118 B1

## Description

This invention relates to a data transmission system having a main station and a plurality of substations which communicate with the main station via a common channel.

One known system of the abovementioned type called "slotted ALOHA" allows any substation which wishes to transmit a data packet to transmit it in any one of a continuous series of time slots marked by a synchronising signal broadcasted by the main station. This system has the disadvantage that, as an increasing number of messages are sent, more and more of the time slots are mutilated by the action of more than one substation transmitting at once.

Another known system described in a paper by Hiromi Okada et al., "Analysis and application of framed ALOHA channel in satellite packet switching networks - FADRA method", published in Volume 60B, Number 8 of Electronics and Communications in Japan, uses frames composed of a fixed number of time slots in which substations may transmit. It achieves higher throughput than the basic slotted ALOHA method, at the cost of some complication, but does not overcome its disadvantage mentioned above.

Another known system called "dynamic framelength slotted ALOHA" again uses frames composed of a number of time slots but the number of slots is varied by the main station in response to the observed occupancy of the slots in a previous frame. It is central to this method that each substation, having a data packet to transmit, does so in a time slot selected randomly. This method, an example of which is described in Patent Specification GB 2069799B, overcomes the disadvantage mentioned above of slotted ALOHA under conditions of heavy traffic flow. However, when each of a relatively small number of users has a continuous stream of data packets for transmission, only a limited proportion (e.g., about 40%) of the time available for transmission is employed usefully. Some time slots are mutilated by transmissions from more than one substation whilst other time slots remain unused. This is an inevitable result of the random selection procedure.

In yet another known system called "time division multiple access" the main station allocates a particular time slot in each frame to each substation. This is satisfactory in a situation where relatively few substations each have a continuous stream of data packets for transmission but is not satisfactory in a situation where each of a relatively large number of substations requires to transmit relatively infrequently.

The present invention arose in an endeavour to cope efficiently with both types of situation both of which may in fact be expected to occur from time to time in a practical environment.

This invention provides a communication system comprising a main station which, in operation defines a frame containing a specified number, which is variable, of time slots; and a plurality of substations each including selection means for selecting a time slot for transmission of information to the main station: characterised in that the selection means in a substation comprises means defining an identity number exclusive to that substation, means for determining a remainder after dividing the identity number by the specified number of time slots, and means for using the remainder to determine the time slot in which transmission takes place.

Means is preferably included for determining whether one or more slots in a frame is or are mutilated by simultaneous transmissions from a plurality of substations. If such a mutilation occurs the number of slots in a subsequent frame is preferably altered. This will usually cause the substations responsible for that mutilation to select different time slots in the next frame. For example, if, in one frame, there are ten time slots and slot number 7 is mutilated due to simultaneous transmission by substations whose identity numbers are 37 and 57; then a change in the number of time slots to eleven will, in the next frame, cause substation 37 to transmit in slot 4 and substation 57 to transmit in slot 2.

Another consideration which the main station may employ in deciding the number of slots to allocate to a frame is any knowledge which it may have regarding the identities of the substations likely to be transmitting in a slot observed to be mutilated. If the main station is in a position to make a reasonable deduction concerning the identities of such sub-stations it can select the number of slots in the next frame so as to minimise the chance of a similar mutilation recurring.

When the highest identity number allocated to any substation expected to transmit is relatively small the main station can set a number of time slots equal to the highest identity number so that no time slot will be mutilated.

The communication system can be a radio communication system in which the substations transmit to the main station on a common radio channel and in which the main station communicates with the substation either on the same or a different channel. The substations can for example be mobile radios but the invention is equally applicable to fixed substations. For example they could be fixed earth stations with the main station being carried on an artificial satellite. The invention is not exclusively applicable to radio systems: but is also applicable to wired or optical fibre systems.

The time slot used for transmission can be determined according to any predetermined function of the "remainder" referred to. For example the number of the selected time slot could be equal to or twice the remainder.

One way in which the invention may be performed will now be described by way of example with reference to the accompanying schematic drawings in which:-

Figure 1 illustrates a main station, substations and communication channels between them;

Figure 2 illustrates details of one of the substations shown in Figure 1; and

Figure 3 illustrates at A and B signals on the two communication channels 5 and 13 of Figure 1.

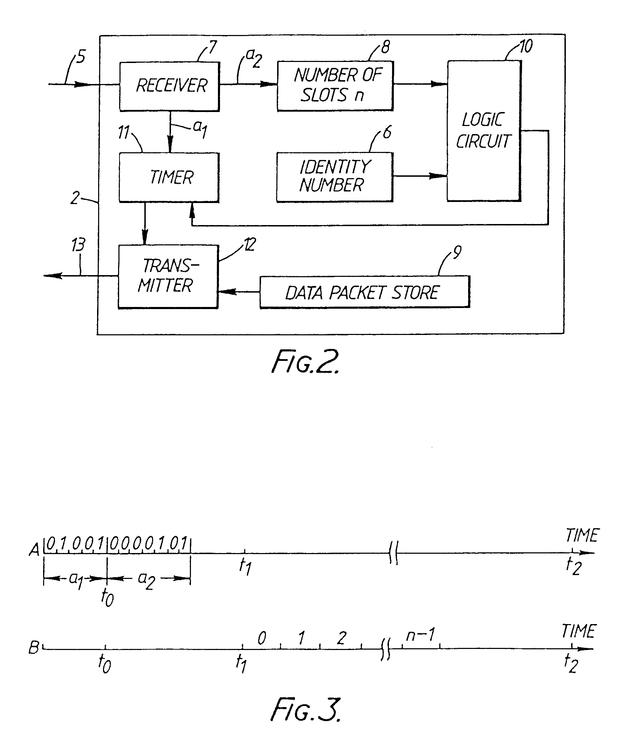

The illustrated system comprises a main station 1 and a number of substations 2, 3, 4, .......N. The main station 1 broadcasts on a first radio channel 5 a message which each substation receives. This message is shown at A on Figure 3 and defines two things. Firstly during time period $a_1$ a series of binary digits which prepares the receivers for reception and defines a time reference $t_0$. Secondly it defines, during period $a_2$ a series of digits which specify a number n of time slots during each of which any substation may transmit a data packet to the main station. This series of time slots begins at a time $t_1$ which is a known time after $t_0$.

The conceptual division of time into these time slots numbered 0 to n-1 is shown at B on Figure 3. The first time slot begins at $t_1$. The group of time slots is called a "frame". After the end of the frame the process is repeated beginning at time $t_2$ with the transmission of another synchronising signal identical to that transmitted during period $a_1$.

Referring now to Figure 2, each substation includes a storage device 6 containing an identity number distinguishing the substation from other substations. In the particular example this identity number is permanently assigned to the substation but in an alternative design it is assigned by the main station during a registration procedure which the substation is obliged to undertake prior to transmitting messages.

On receiving, in a receiver 7, the information transmitted by the main station during period $a_2$, the digital number n transmitted during this period is stored in a store 8, this number representing the number of slots in a frame. The substation has in a store 9 a data packet to be to be transmitted and a logic circuit 10 by which it decides in which time slot to transmit it. It decides this by calculating the remainder left over after dividing the identity number held in store 6 by the number of slots held in store 8. This remainder indicates the number of the time slot in which the data packet should be transmitted. A timer 11 is set by the synchronising signal transmitted during period $a_1$ and received by the receiver 7. The timer 11 causes a transmitter 12 to transmit, during the selected time slot the data packet to the base station. It does this on a channel 13 which is common to all the substations.

If any data packet is to be transmitted in the reverse direction i.e., from the main station to a substation, this can be done on the channel 5 during the periods $t_1$ and $t_2$ indicated at A.

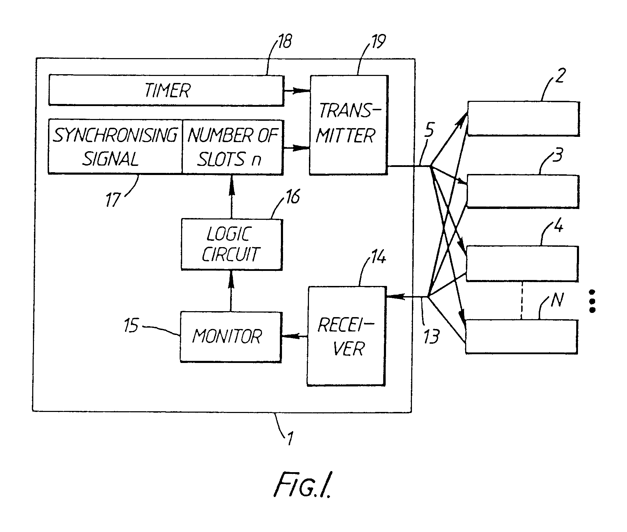

A data packet from a substation is received in the main station by a receiver 14 (Figure 1). A monitor 15 observes the condition of the channel 13 during each time slot i.e., it records whether it is occupied, unoccupied or mutilated. By "mutilated" is meant the occupation of a time slot by more than one data packet. A logic circuit 16 uses this information to control the content of one half of a store 17 which contains a number n defining the number of slots in the next frame. The other half of the store 17 contains a series of digits defining the synchronising signal transmitted during period $a_1$. A timer 18 causes a transmitter 19 to transmit the contents of store 17 at the beginning of each frame as shown at A on Figure 3.

The components 15 and 16 generally follow the principles described in U.K. Patent Specification GB 2069799B but there is an important difference as follows. If any mutilated time slot is observed by the monitor 15 the logic circuit 16 will always change the number n for example by increasing it by 1. This minimises the possibility of two substations which have transmitted in the same slot in one frame from doing so in the next.

## Claims

1.  A communication system comprising a main station (1) which, in operation defines a frame containing a specified number (n), which is variable, of time slots; and a plurality of substations (2, 3, 4-N) each including selection means (6-12) for selecting a time slot for transmission of information to the main station: characterised in that the selection means (6-12) in a substation comprises means (6) defining an identity number exclusive to that substation, means (10) for determining a remainder after dividing the identity number by the number (n) of time slots, and means (11) for using the remainder to determine the time slot in which transmission takes place.

2.  A communication system according to claim 1 in which the main station (1) includes means (15) for recognising a time slot which is mutilated by virtue of two or more substations having transmitted in it and means (16) for adjusting the number of slots in a subsequent frame whenever such a mutilated time slot is recognised.

**Patentansprüche**

1. Ein Kommunikationssystem mit einer Hauptstation (1), die im Betrieb einen Rahmen definiert, der eine spezifizierte, variable Zahl (n) von Zeitschlitzen enthält; und mit einer Vielzahl von Unterstationen (2, 3, 4 - N), wobei jede Auswahlmittel (6-12) einschließt zur Auswahl eines Zeitschlitzes für die Übermittlung einer Information an die Hauptstation: dadurch gekennzeichnet, daß das Auswahlmittel (6-12) in einer Unterstation ein Mittel (6), das eine Identitätsnummer exklusiv für diese Unterstation definiert, ein Mittel (10) zur Bestimmung eines Restes nach der Division der Identitätsnummer durch die Zahl (n) der Zeitschlitze und ein Mittel (11) aufweist, um den Rest zur Bestimmung des Zeitschlitzes, in welchem die Übermittlung stattfindet, zu verwenden.

2. Ein Kommunikationssystem gemäß Anspruch 1, in welchem die Hauptstation (1) ein Mittel (15) zur Erkennung eines Zeitschlitzes, der mehrfach besetzt vermöge zweier oder mehrerer Unterstationen ist, die in ihm übermittelt haben, und ein Mittel (16) einschließt zur Einstellung der Zahl der Schlitze in einem nachfolgenden Rahmen, wann immer ein solcher mehrfach besetzter Zeitschlitz erkannt wird.

**Revendications**

1. Système de transmission comprenant une station principale (1) qui, en fonctionnement, définit une trame contenant un nombre spécifié (n) qui est variable, de tranches de temps ; et plusieurs sous-stations (2, 3, 4, ... N) comportant chacune un moyen de sélection (6 à 12) servant à sélectionner une tranche de temps pour émettre une information à destination de la station principale ; caractérisé en ce que le moyen de sélection (6 à 12) d'une sous-station comprend un moyen (6) qui définit un nombre d'identifications exclusif de cette sous-station, un moyen (10) qui détermine le reste obtenu après division du numéro d'identification par le nombre (n) de tranches de temps, et un moyen (11) qui utilise ce reste pour déterminer la tranche de temps pendant laquelle l'émission a lieu.

2. Système de transmission selon la revendication 1, dans lequel la station principale (1) comporte un moyen (15) servant à reconnaître une tranche de temps qui a été mutilée du fait que deux sous-stations, ou plus, ont émis dans cette tranche de temps, et un moyen (16) servant à ajuster le nombre de tranches d'une trame suivante à chaque fois qu'une telle tranche de temps mutilée a été reconnue.

FIG.I.

FIG.2.

FIG.3.